# FASCICULE DE BREVET EUROPEEN

(11) **EP 1 346 240 B1**
(45) Date de publication et mention de la délivrance du brevet: **23.04.2008**
(21) Numéro de dépôt: 01990614.8
(22) Date de dépôt: 26.12.2001
(51) Int. Cl.: G01V 15/00, F16L 1/11

(54) **SYSTEME DE DETECTION ET D'IDENTIFICATION D'OBJETS OPTIQUEMENT INVISIBLES MUNIS D'UN CODAGE**
SYSTEM ZUM ERKENNEN OPTISCH UNSICHTBARER OBJEKTE, DIE MIT CODIERUNG AUSGESTATTET SIND
SYSTEM FOR DETECTING OPTICALLY INVISIBLE OBJECTS PROVIDED WITH ENCODING

(30) Priorité: 28.12.2000 FR 0017248
(43) Date de publication de la demande: 24.09.2003
(73) Titulaire: PLYMOUTH FRANCAISE, 69320 Feyzin (FR)
(72) Inventeur: BELLOIR, Fabien, F-51380 TREPAIL (FR)
(74) Mandataire: Maureau, Philippe
(86) Numéro de dépôt international: PCT/FR2001/004207
(87) Numéro de publication internationale: WO 2002/054112

(56) Documents cités:
- EP-A- 1 006 371
- FR-A- 2 667 953
- FR-A- 2 753 280
- US-A- 4 161 686
- US-A- 5 045 368
- DATABASE WPI Section EI, Week 197632, Derwent Publications Ltd., London, GB; Class W06, AN 1976-G9960X & CA 993 516 A (COSMAN A D) 20 Juillet 1976

## Description

La présente invention a pour objet un système de détection et d'identification d'objets optiquement invisibles munis d'un codage.

Ce système s'applique notamment, mais non exclusivement, à l'identification et au suivi de canalisations enterrées ou d'autres réseaux enfouis dans le sol ou noyés dans des ouvrages de génie civil.

La difficulté d'obtenir des informations sur la présence, le tracé et la nature de canalisations ou de lignes enterrées tient à ce que, la plupart du temps, rien n'est visible à l'extérieur et que les plans existant se révèlent souvent imprécis, incomplets, voire quelquefois erronés.

Il importe, pour un gain de temps et de coûts, de pouvoir détecter la présence de telles canalisations et lignes, et de les localiser avec précision, sans creuser le sol, ni détruire des ouvrages, à l'occasion de travaux ultérieurs. D'une façon générale, les procédés utilisés doivent être simples à mettre en oeuvre par du personnel de chantier de qualification modeste. En outre, l'appareillage pour la mise en oeuvre de ces procédés de détection doit être robuste et fiable et son coût doit rester inférieur à l'investissement que nécessiterait la mise à jour par fouille des canalisations ou de leur grillage avertisseur pour s'assurer de leur présence.

Plusieurs procédés peuvent être utilisés pour réaliser la détection de canalisations enterrées. Un premier procédé consiste à "visualiser" une canalisation enterrée métallique ou non à l'aide d'un radar de sous-sol. Cependant, le coût et la complexité des systèmes mis en oeuvre font que ces dispositifs sont inadaptés aux problèmes pratiques posés.

La détection par voie électromagnétique est la méthode la plus utilisée. Cette détection électromagnétique peut être effectuée par des détecteurs de métaux classiques, des détecteurs électromagnétiques reposant sur la détection d'un signal, et des détecteurs associés à des marqueurs.

Les détecteurs de métaux classiques détectent de façon indifférenciée toutes les pièces métalliques qui sont enfouies dans le sol, sans faire de discriminations entre les pièces à détecter et des pièces parasites.

Si la canalisation est revêtue d'un dispositif de codage comportant des éléments électriquement conducteurs, tels que plaques ou fils, disposés à des espacements déterminés, et montés sur un support isolant, un détecteur peut détecter de tels éléments, mais la lecture du code peut être perturbée par les éléments parasites enfouis dans le sol, ou encore par la présence proche de plusieurs objets comportant des éléments de codage.

Une autre solution consiste à utiliser des détecteurs électromagnétiques reposant sur la détection d'un signal. Cette solution nécessite l'injection d'un signal électrique dans une canalisation ou dans un câble enfoui, ou dans un élément métallique associé et suivant le tracé d'une canalisation. Une telle solution présente l'inconvénient de devoir accéder partiellement à la canalisation ou à l'élément métallique associé pour injecter le signal électrique, via des boîtiers installés à distances régulières sur la ligne pour servir de points d'accès.

Dans certains cas, il est possible d'utiliser un détecteur à signal passif, reposant sur la détection d'un signal existant. Tel est le cas des câbles sous tension des lignes du réseau de distribution d'électricité et du réseau téléphonique, où un courant ou signal est habituellement présent. La terre est aussi le siège de nombreux courants de retour qui tendent à se rencontrer dans les canalisations métalliques. Toutefois, la détection d'un câble sous tension non chargé n'est pas possible, puisque seule la circulation d'un courant engendre un champ magnétique.

Cette détection est cependant aléatoire en raison de la possibilité de charges variables ou nulles dans le cas d'un réseau de distribution d'électricité, en raison de l'utilisation très répandue de paires de câbles torsadées, de sorte que les champs "aller" et "retour" tendent à se compenser.

Il existe des détecteurs associés à des marqueurs semi-actifs ou résonnants, voir par exemple le document US-A-5 045 368. Les marqueurs comportent une bobine passive enrobée dans une coquille protectrice en matière isolante, et accordée à une certaine fréquence. Le détecteur comprend un générateur électromagnétique qui pulse une gamme de fréquences et excite les bobines. L'inconvénient d'un tel système réside dans le fait que, s'il s'agit de suivre une canalisation, il est nécessaire d'enfouir les marqueurs à intervalles réguliers et de façon suffisamment rapprochée pour ne pas perdre la canalisation, ce qui entraîne un coût d'installation élevé. De plus, aucune indication de direction n'est donnée. Enfin, s'il est possible de détecter une canalisation, l'identification de celle-ci est beaucoup plus complexe.

Le but de l'invention est de fournir un système de détection et d'identification d'objets optiquement invisibles, munis d'un codage, qui soit autonome, c'est-à-dire ne nécessitant pas de points d'accès à l'objet à détecter, qui permette une identification certaine de l'objet avec une discrimination très fine, et qui soit insensible à l'environnement extérieur, c'est-à-dire qui permette de s'affranchir d'éléments parasites résultant de la présence d'objets métalliques, ou bien de la nature conductrice de certains sols.

A cet effet, le système de détection et d'identification d'objets optiquement invisibles, munis d'un codage, qu'elle concerne, dans lequel chaque objet est muni d'éléments de codage se présentant sous la forme d'une succession d'éléments conducteurs électriquement de faible épaisseur, détectables par voie électromagnétique, formant chacun une surface de dimensions prédéterminées et disposés dans ou sur un support protecteur électriquement isolant, ces éléments étant séparés les uns des autres par des intervalles également de valeur prédéterminée, comprenant un détecteur électromagnétique comportant au moins une bobine d'émission et au moins deux bobines de réception écartées les unes des autres, les bobines d'émission et de réception étant, agencées pour fournir au détecteur au moins deux signaux différents représentatifs du code porté par un objet et de son environnement, des moyens étant prévus pour traiter ces signaux afin de reconstruire la signature du seul code et de localiser et identifier ainsi l'objet codé.

Le codage d'un objet est ainsi repéré plusieurs fois, grâce aux différents signaux représentatifs de celui-ci. A partir des différents signaux, la signature du code est reconstruite par un traitement mathématique, en s'affranchissant des composantes des signaux résultant de la présence d'objets métalliques, ou de la nature plus ou moins conductrice du sol.

Suivant une caractéristique de l'invention, le détecteur comprend un calculateur recevant les différents signaux et reconstruisant le code exact de l'objet par des méthodes mathématiques basées par exemple sur l'analyse en composantes indépendantes ou ses dérivés comme les méthodes de séparation de sources.

En outre, le détecteur comporte un capteur permettant de mesurer son déplacement relatif et provoquant les opérations de traitement des signaux par rapport à des distances de déplacement prédéterminées. Ces procédés de mesure de déplacement peuvent être de différentes natures (codeur incrémental, mesure optique, liaison radio, GPS, etc.....). Une réalisation particulière est de relier une roue solidaire du détecteur à un codeur incrémental qui mesure précisément son déplacement.

Cette caractéristique permet de s'affranchir de la vitesse de déplacement du détecteur par rapport à l'objet à détecter et à identifier, puisque seule est prise en considération, pour réaliser deux traitements successifs, la valeur de déplacement du détecteur.

Suivant une possibilité, le pas réglable de déplacement du détecteur entre deux opérations de traitement est de l'ordre de 4 mm.

Il doit être précisé que l'objet à détecter et à identifier peut être un objet de forme allongée, tel qu'une conduite, sur laquelle les éléments de codage sont disposés de façon linéaire, les uns à la suite des autres, ou peut être un objet de forme plus ponctuelle, sur lequel les éléments de codage sont disposés de façon concentrique.

Les éléments de codage peuvent être intégrés aux objets à détecter et à identifier par différents procédés, tels que : collage, cerclage, double ou triple extrusion, peinture, pulvérisation, injection, fusion.... Lorsqu'il s'agit de tubes, les éléments de codage peuvent être intégrés au tube lors de la fabrication de ceux-ci, mais peuvent également être ajoutés a posteriori, c'est-à-dire après fabrication, par ajout d'une enveloppe ou d'une peau intégrant les codes.

Différentes formes d'exécution de l'invention sont possibles ; il peut y avoir une bobine d'émission émettant à une seule fréquence, le nombre de signaux traités étant égal au nombre de bobines, puisque chaque bobine reçoit un signal tenant compte de sa position dans l'espace. Il est également possible de réaliser un détecteur comportant plusieurs bobines émettrices émettant de façon alternative et dont les signaux sont reçus par plusieurs bobines réceptrices écartées les unes des autres.

Suivant une forme d'exécution avantageuse de ce détecteur, le détecteur comprend une bobine d'émission émettant un signal électromagnétique à une fréquence déterminée et trois bobines de réception disposées suivant un cercle et décalées de 90° les unes par rapport aux autres.

Quel que soit le nombre de bobines d'émission, celles-ci peuvent émettre simultanément un signal de fréquence fixée, simultanément des signaux de fréquence différentes ou successivement avec de faibles décalages, des signaux de fréquences différentes. Toutes les combinaisons possibles peuvent être envisagées.

Les bobines démission et de réception peuvent être de différentes formes : rondes, ovoïdes, carrées, rectangulaires..., réalisées par différents moyens : gravure ou autre, et posséder différentes structures : plates ou à enroulements, sans que le principe de l'invention ne s'en trouve modifié

Suivant une forme particulière de réalisation, les bobines sont des bobines double face plates et gravées comportant des supports époxy.

Les fréquences d'émission peuvent être comprises dans une très large gamme de fréquence suivant la nature des matériaux conducteurs utilisés et la différence voulue entre les signaux perçus par la ou les bobines de réception.

Dans la mesure où les éléments de codage sont à base d'aluminium, la fréquence du signal électromagnétique émis par la ou les bobines d'émission est de l'ordre de 10 KHz. Les bobines d'émission et de réception peuvent être de forme ronde, ou de toute autre forme, telle que ovoïde, carrée, rectangulaire, orthogonale, sans que le comportement du capteur n'en soit modifié.

Dans la mesure où le détecteur comprend une bobine d'émission et plusieurs bobines de réception, il est intéressant de disposer d'une bobine d'émission centrale, et de disposer de façon symétrique les bobines de réception, ce qui permet de bénéficier d'un renseignement sur l'écart entre le déplacement de l'opérateur, c'est-à-dire du capteur, avec l'axe défini par la canalisation, c'est-à-dire par le codage.

De toute façon, l'invention sera bien comprise à l'aide de la description qui suit, en référence au dessin schématique annexé représentant, à titre d'exemples non limitatifs, plusieurs formes d'exécution de ce système :
Figure 1 est une vue en perspective d'un tronçon de canalisation appartenant au système selon l'invention ;
Figure 2 est une vue de ce tronçon de canalisations en position enterrée, et au cours de sa phase de détection ;
Figure 3 est une vue d'une courbe représentant les signaux reçus par trois bobines de réception dans le cas d'une détection conforme à la figure 2 ;
Figure 4 est une vue similaire à figure 3 après traitement des signaux en vue de séparer le codage des facteurs parasites ;
Figures 5 à 7 sont trois vues schématiques de trois détecteurs.

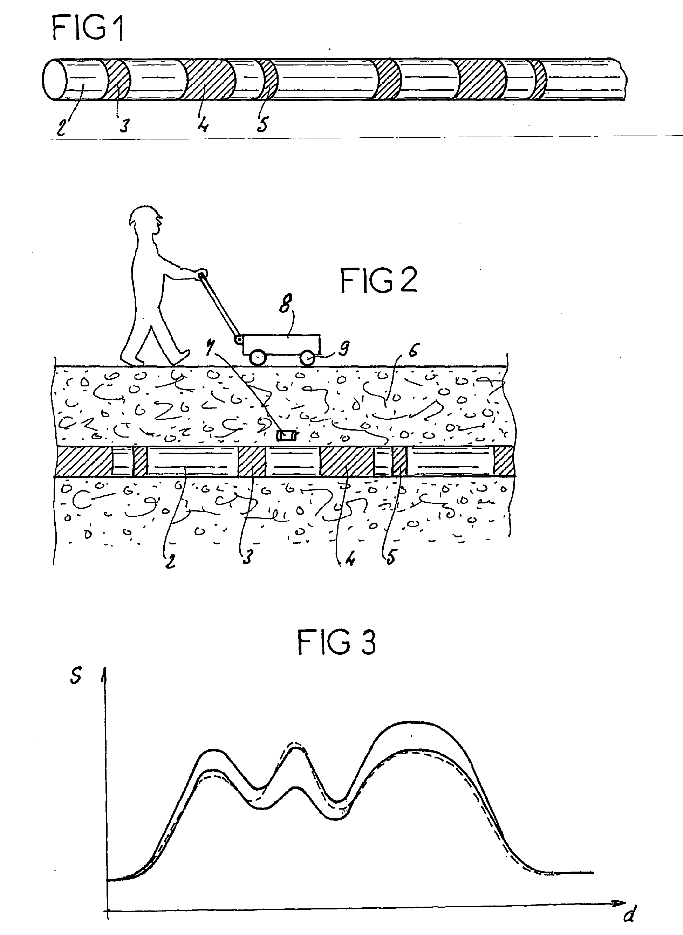

La figure 1 représente une canalisation 2, par exemple une canalisation en matière synthétique, revêtue sur sa face extérieure d'éléments de codage 3, 4, 5 constitués par des bandes de matériau conducteur, par exemple d' aluminium, chacune de dimensions déterminées, et séparées les unes des autres par des distances déterminées. Cette canalisation est destinée à être enfouie dans la terre 6, comme montré à la figure 2, par exemple à une profondeur comprise entre 20 cm et 1,20 m.

Le système selon l'invention vise à permettre de déterminer la position et l'identification de cette conduite, même en présence d'éléments extérieurs parasites, tels qu'une boîte métallique 7. A cet effet, est mis en oeuvre un détecteur 8 monté par exemple sur une ou plusieurs roues 9, et déplaçable par un opérateur.

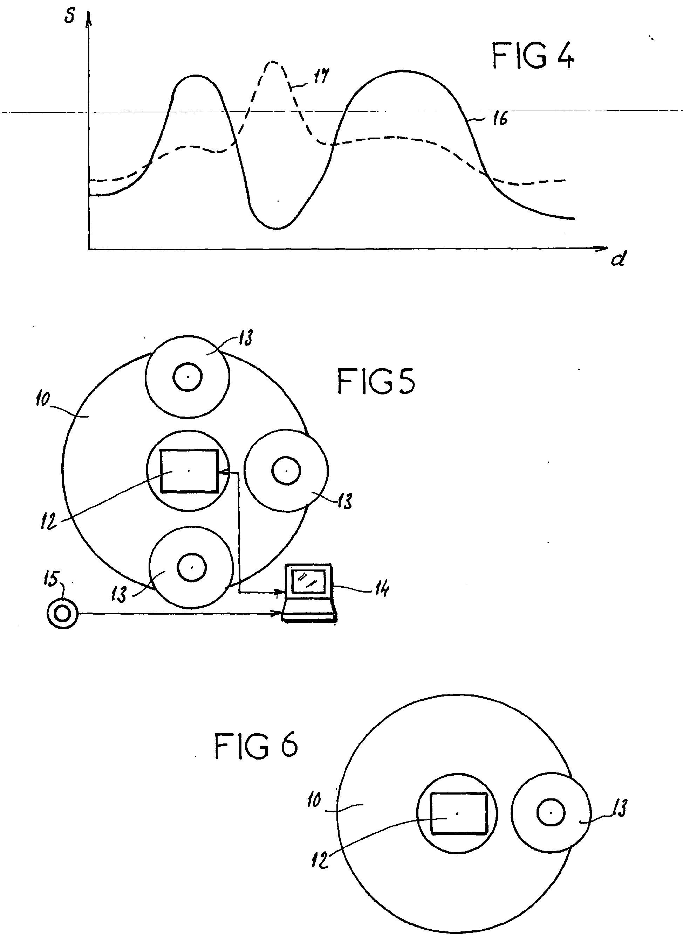

Dans le cas décrit, le détecteur est celui représenté à la figure 5, et comporte une bobine d'émission 10 centrale, au centre de laquelle est disposée une carte électronique 12, et tout autour de laquelle sont disposées trois bobines de réception 13, décalées de 90° les unes par rapport aux autres. Il s'agit en l'occurrence de bobines double face plates et gravées comportant des supports époxy. La carte électronique 12 est reliée à un calculateur 14. A ce calculateur est également relié un codeur incrémental qui indique les moments auxquels doit être effectué le traitement des signaux reçus. La fréquence d'émission de la bobine est de l'ordre de 10 KHz. En pratique, l'opérateur déplace le détecteur au sol au-dessus de la canalisation 2. La bobine émettant un signal électromagnétique, ce sont trois signaux distincts qui sont reçus par les trois bobines 13, ces signaux étant représentés à la figure 3, qui est un graphique représentant en abscisse le déplacement du détecteur et en ordonnée l'intensité du signal reçu par chaque détecteur. Il est visible que l'objet métallique 7 situé à proximité de la canalisation ressort clairement de la figure 3 où il est identifié par le pic central. Le traitement mathématique des trois signaux, par exemple par une méthode d'analyse en composantes indépendantes permet de reconstruire la courbe 17, qui correspond à la courbe 16, et d'identifier la courbe 17 qui correspond à l'objet métallique dont la présence venait parasiter la mesure.

Si la perturbation était, par exemple, un code relatif à la présence d'une autre canalisation, le système permet également de reconstruire la signature de cet autre code. Après la reconstruction des signatures des codes, un traitement permettant d'identifier précisément les différents codes est mis en oeuvre et fournit alors une réponse fiable quant à la nature des canalisations et à leur profondeur d'enfouissement.

La figure 6 représente un exemple sortant du cadre de l'invention du détecteur, dans lequel les mêmes éléments sont désignés par les mêmes références que précédemment. Dans ce cas, le détecteur comprend une seule bobine d'émission 10 et une seule bobine de réception 13. Pour bénéficier de deux signaux de réception, la bobine d'émission émet successivement des signaux électromagnétiques suivant des fréquences différences.

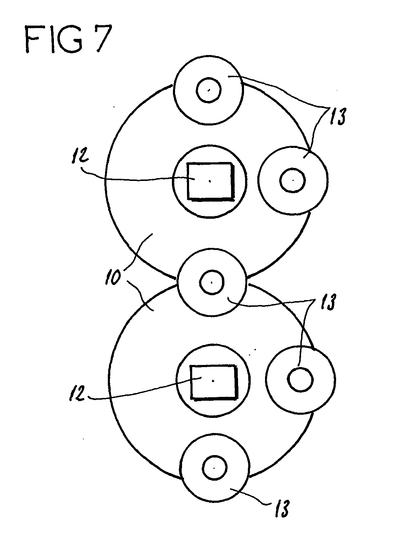

La figure 7 représente une autre forme d'exécution d'un détecteur comportant deux bobines d'émission 10 et cinq bobines de réception 13.

Comme il ressort de ce qui précède, l'invention apporte une grande amélioration à la technique existante en fournissant un système de détection et d'identification d'objets optiquement invisibles, munis d'un codage, qui est autonome, c'est-à-dire ne nécessite pas de point d'accès à l'objet, qui permet la détection et l'identification de l'objet par une discrimination fine par rapport à l'environnement de l'objet, et qui est d'une mise en oeuvre très simple pour l'opérateur.

Comme il va de soi, l'invention ne se limite pas aux seules formes d'exécution de ce système, décrites ci-dessus à titre d'exemples. C'est ainsi notamment que les bobines pourraient ne pas être rondes mais carrées ou ovoïdes, que les bobines de réception pourraient ne pas être décalées de 90° les unes par rapport aux autres dans le cas d'un détecteur à trois bobines, ou encore que les bobines de réception pourraient ne pas être parallèles mais perpendiculaires aux bobines d'émission, sans que l'on sorte pour autant du cadre de l'invention.

## Revendications

1. Système de détection et d'identification d'objets optiquement invisibles, munis d'un codage, dans lequel chaque objet (2) est muni d'éléments de codage se présentant sous la forme d'une succession d'éléments conducteurs électriquement (3, 4, 5) de faible épaisseur, détectables par voie électromagnétique, formant chacun une surface de dimensions prédéterminées et disposés dans ou sur un support protecteur électriquement isolant, ces éléments étant séparés les uns des autres par des intervalles également de valeur prédéterminée, comprenant un détecteur électromagnétique (8) comportant au moins une bobine d'émission (10) **caractérisé en ce que** le détecteur électromagnétique comporte au moins deux bobines de réception (13) écartées les unes des autres, les bobines d'émission et de réception étant agencées pour fournir au détecteur au moins deux signaux différents représentatifs du code porté par un objet et de son environnement, des moyens étant prévus pour traiter ces signaux afin de reconstruire la signature du seul code et de localiser et identifier ainsi l'objet codé.

2. Système selon la revendication 1 , **caractérisé en ce que** le détecteur (8) comprend un calculateur recevant les différents signaux et reconstruisant le code exact de l'objet par des méthodes mathématiques basées sur l'analyse en composantes indépendantes ou ses dérivées comme les méthodes de séparation de sources.

3. Système selon l'une des revendications 1 et 2, **caractérisé en ce que** le détecteur (8) est associé à un capteur permettant de mesurer son déplacement relatif et provoquant une opération de traitement des signaux reçus indépendamment de la vitesse de mouvement de l'opérateur, tel qu'une roue (9) associée à un compteur incrémental (15) provoquant une opération de traitement des signaux reçus, après déplacement du détecteur d'une distance prédéterminée.

4. Système selon la revendication 3, **caractérisé en ce que** le pas réglable de déplacement du détecteur (8) entre deux opérations de traitement est de l'ordre de 4 mm.

5. Système selon l'une des revendications 1 à 4, **caractérisé en ce que** les éléments conducteurs de codage (3, 4, 5) sur les objets à détecter sont intégrés à ceux-ci par l'un des procédés suivants : collage, cerclage, double ou triple extrusion, peinture, pulvérisation, injection, fusion.

6. Système selon l'une des revendications 1 à 5, **caractérisé en ce que** le détecteur (8) comprend une bobine d'émission (10) émettant un signal électromagnétique à une fréquence déterminée et trois bobines de réception (13) disposées suivant un cercle et décalées de 90° les unes par rapport aux autres.

7. Système selon l'une des revendications 1 à 6, **caractérisé en ce que** les bobines (10, 13) sont des bobines double face plates et gravées comportant des supports époxy.

8. Système selon l'une des revendications 1 à 7, **caractérisé en ce que** la fréquence du signal électromagnétique émis par la ou les bobines d'émission est de l'ordre de 10 KHz.

## Claims

1. System for detecting and identifying optically invisible objects which are provided with a coding, in which each object (2) is provided with coding elements exhibiting the form of a succession of electrically conducting elements (3, 4, 5) of small thickness, which are electromagnetically detectable, each forming a surface of predetermined dimensions and arranged in or on an electrically insulating protective support, these elements being separated from one another by intervals likewise of predetermined value, comprising an electromagnetic detector (8) including at least one transmission coil (10), **characterized in that** the electromagnetic detector includes at least two mutually staggered reception coils (13), the transmission and reception coils being devised so as to provide the detector with at least two different signals representative of the code carried by an object and of its environment, means being envisaged for processing these signals so as to reconstruct the signature of the single code and thus to locate and identify the coded object.

2. System according to Claim 1, **characterized in that** the detector (8) comprises a computer receiving the various signals and reconstructing the exact code of the object by mathematical methods based on independent component analysis or derivatives thereof such as source separation methods.

3. System according to either of Claims 1 and 2, **characterized in that** the detector (8) is associated with a sensor making it possible to measure its relative displacement and triggering an operation of processing the signals received independently of the rate of movement of the operator, such as a wheel (9) associated with an incremental counter (15) triggering an operation of processing the signals received, after displacement of the detector by a predetermined distance.

4. System according to Claim 3, **characterized in that** the adjustable shift of displacement of the detector (8) between two processing operations is of the order of 4 mm.

5. System according to one of Claims 1 to 4, **characterized in that** the conducting coding elements (3, 4, 5) on the objects to be detected are integrated into the latter by one of the following processes: adhesive bonding, hooping, double or triple extrusion, painting, spraying, injection, fusion.

6. System according to one of claims 1 to 5, **characterized in that** the detector (8) comprises a transmission coil (10) transmitting an electromagnetic signal at a specified frequency and three reception coils (13) arranged along a circle and mutually offset by 90°.

7. System according to one of Claims 1 to 6, **characterized in that** the coils (10, 13) are two-sided flat, etched coils including epoxy supports.

8. System according to one of Claims 1 to 7, **characterized in that** the frequency of the electromagnetic signal transmitted by the transmission coil or coils is of the order of 10 KHz.

## Patentansprüche

1. System zum Erkennen und zur Identifizierung von optisch unsichtbaren Objekten, die mit einer Codierung versehen sind, wobei jedes Objekt (2) mit Codierungselementen versehen ist, die in Form einer Reihe von dünnen elektrisch leitenden Elementen (3, 4, 5) vorliegen, die elektromagnetisch erkennbar sind, jeweils eine Oberfläche mit vorherbestimmten Abmessungen bilden und in oder auf einer elektrisch isolierenden Trägerschutzvorrichtung angeordnet sind, wobei diese Elemente durch Abstände mit ebenfalls einem vorherbestimmten Wert voneinander getrennt sind, umfassend einen elektromagnetischen Detektor (8), der mindestens eine Sendespule (10) umfasst, **dadurch gekennzeichnet, dass** der elektromagnetische Detektor mindestens zwei Empfangsspulen (13) aufweist, die voneinander entfernt sind, wobei die Sende- und Empfangsspulen angeordnet sind, um dem Detektor mindestens zwei verschiedene Signale zu liefern, die den Code, den ein Objekt trägt, sowie seine Umgebung darstellen, wobei Mittel vorgesehen sind, um diese Signale zu verarbeiten, um die Signatur des einzelnen Codes zu rekonstruieren und somit das codierte Objekt aufzufinden und zu identifizieren.

2. System nach Anspruch 1, **dadurch gekennzeichnet, dass** der Detektor (8) einen Rechner umfasst, der die verschiedenen Signale empfängt und den genauen Code des Objekts durch mathematische Methoden rekonstruiert, die auf der Analyse unabhängiger Komponenten oder Ableitungen davon, wie die Methoden der Quellentrennung, basieren.

3. System nach einem der Ansprüche 1 und 2, **dadurch gekennzeichnet, dass** der Detektor (8) mit einem Sensor verbunden ist, der es ermöglicht, seine Relativbewegung zu messen, und einen Verarbeitungsvorgang der Signale veranlasst, die unabhängig von der Bewegungsgeschwindigkeit der Betätigungsvorrichtung, wie etwa eines Rads (9), das mit einem Inkrementalzähler (15) verbunden ist, empfangen werden, was einen Verarbeitungsvorgang der empfangenen Signale veranlasst, nachdem der Detektor über eine vorherbestimmte Distanz bewegt wurde.

4. System nach Anspruch 3, **dadurch gekennzeichnet, dass** der regulierbare Bewegungsschritt des Detektors (8) zwischen zwei Verarbeitungsvorgängen in der Größenordnung von 4 mm liegt.

5. System nach einem der Ansprüche 1 bis 4, **dadurch gekennzeichnet, dass** die leitfähigen Codierelemente (3, 4, 5) auf den zu erkennenden Objekten darin durch eines der folgenden Verfahren integriert werden: Verleimung, Umreifung, Doppel- oder Dreifachextrusion, Lackierung, Zerstäubung, Einspritzung, Verschmelzung.

6. System nach einem der Ansprüche 1 bis 5, **dadurch gekennzeichnet, dass** der Detektor (8) eine Sendespule (10), die ein elektromagnetisches Signal auf einer bestimmten Frequenz sendet, und drei Empfangsspulen (13), die an einem Kreis entlang angeordnet und zueinander um 90° verschoben sind, umfasst.

7. System nach einem der Ansprüche 1 bis 6, **dadurch gekennzeichnet, dass** die Spulen (10, 13) Spulen mit zwei flachen und geprägten Seiten sind, die Epoxidträger umfassen.

8. System nach einem der Ansprüche 1 bis 7, **dadurch gekennzeichnet, dass** die Frequenz des elektromagnetischen Signals, das von der bzw. den Sendespule(n) gesendet wird, in der Größenordnung von 10 KHz liegt.
